(19) **Europäisches Patentamt**
European Patent Office
Office européen des brevets

(11) **EP 1 423 955 B1**

(12) **EUROPÄISCHE PATENTSCHRIFT**

(45) Veröffentlichungstag und Bekanntmachung des Hinweises auf die Patenterteilung:
**09.05.2007   Patentblatt 2007/19**

(21) Anmeldenummer: **02767135.3**

(22) Anmeldetag: **03.09.2002**

(51) Int Cl.:
***H04L 27/00*** *(2006.01)*

(86) Internationale Anmeldenummer:
**PCT/DE2002/003250**

(87) Internationale Veröffentlichungsnummer:
**WO 2003/024044 (20.03.2003 Gazette 2003/12)**

(54) **ADAPTIVES VERFAHREN ZUR ANPASSUNG DER RATENVERTEILUNG AN VORGEGEBENE BLOCKLÄNGEN**

METHOD FOR ADAPTING RATE DISTRIBUTION TO PREDEFINED BLOCK LENGTHS

PROCEDE D'ADAPTATION DE LA REPARTITION DU DEBIT A DES LONGUEURS DE BLOCS PREDEFINIES

(84) Benannte Vertragsstaaten:
**DE ES FR GB IT**

(30) Priorität: **04.09.2001   DE 10143282**

(43) Veröffentlichungstag der Anmeldung:
**02.06.2004   Patentblatt 2004/23**

(73) Patentinhaber: **SIEMENS AKTIENGESELLSCHAFT**
**80333 München (DE)**

(72) Erfinder: **KLINSKI, Robert**
**81475 München (DE)**

(56) Entgegenhaltungen:
**US-A- 6 134 273**

• **CHOW P S ET AL: "A PRACTICAL DISCRETE MULTITONE TRANSCEIVER LOADING ALGORITHM FOR DATA TRANSMISSION OVER SPECTRALLY SHAPED CHANNELS" IEEE TRANSACTIONS ON COMMUNICATIONS, IEEE INC. NEW YORK, US, Bd. 43, Nr. 2/4, PART 2, 1. Februar 1995 (1995-02-01), Seiten 773-775, XP000502585 ISSN: 0090-6778**
• **GRUENHEID R ET AL: "ADAPTIVE MODULATION AND MULTIPLE ACCESS FOR THE OFDM TRANSMISSION TECHNIQUE" WIRELESS PERSONAL COMMUNICATIONS, KLUWER ACADEMIC PUBLISHERS, NL, Bd. 13, Nr. 1/2, Mai 2000 (2000-05), Seiten 5-13, XP000894156 ISSN: 0929-6212**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 423 955 B1

**Beschreibung**

Die Erfindung betrifft ein Datenkommunikationssystem gemäß Oberbegriff des Anspruchs 1, eine Sende- und eine Empfangseinheit zur Verwendung in einem derartigen System, sowie ein Datenübertragungsverfahren gemäß Oberbegriff des Anspruchs 11. Des weiteren betrifft die Erfindung ein Verfahren zum Zuordnen von Daten-Bits zu mehreren, jeweils Frequenzmultiplex-Übertragungssignalen mit bestimmter Frequenz zugeordneten Signalräumen gemäß Oberbegriff des Anspruchs 12.

Datenkommunikationssysteme weisen i.A. eine Sendeeinheit, z.B. ein in einer EWSD-Endvermittlungsstelle vorgesehenes erstes Modem auf, von wo aus modulierte Übertragungssignale über einen Übertragungskanal an eine Empfangseinheit, z.B. an ein zweites, in einer Teilnehmer-Endanschlußeinrichtung vorgesehenes Modem übertragen werden.

Die Datenkommunikation zwischen den Modems (Modulatoren-Demodulatoren) kann z.B. mittels POTS- (Plain Old Telephone Service) bzw. ISDN- (Integrated Services Digital Network), und mittels DSL- (Digital Subscriber Line), z.B. mittels ADSL- Datenübertragung erfolgen.

Zur DSL-Datenübertragung werden Frequenzbänder (bins) verwendet, die oberhalb der zur POTS- bzw. ISDN-Datenübertragung genutzten Frequenzbänder liegen. Zur Übertragung von Daten innerhalb der jeweiligen Frequenzbänder werden sog. QAM- bzw. M-QAM-Datenübertragungsverfahren eingesetzt. Dabei werden - jeweils eine bestimmte Zeitdauer andauernde - Cosinus- (bzw. Sinus-)Schwingungen verwendet, deren Frequenzen z.B. jeweils in der Mitte des jeweiligen Frequenzbands liegen (sog. Trägerschwingungen).

Jedem zu übertragenden Bit oder jeder zu übertragenden Bitfolge ist (z.B. unter Verwendung eines in einem zweidimensionalen, komplexen Signalraum dargestellten Phasensterns) eine Trägerschwingung bestimmter Amplitude und Phase zugeordnet. Wird diese an die Empfangseinheit übertragen, kann aus der Amplitude und Phase der jeweils empfangenen Trägerschwingung in der Empfangseinheit das jeweils übertragene Bit bzw. die jeweils übertragene Bitfolge bestimmt werden.

Bei M-QAM-Verfahren kennzeichnet die Variable "M" die Anzahl der diskreten Zustände im einem jeweiligen Träger zugeordneten Signalraum (d.h. die QAM-Trägergranularität), und somit die Anzahl der Bits, die von einer bestimmten Trägerschwingung (während der Dauer der Schwingung) übertragen werden können.

Bei der Zuordnung von Bits zu den einzelnen Trägern bzw. Signalräumen kann z.B. das für den jeweiligen Träger geltende Signal-Rauschverhältnis SNR (SNR = signal to noise ratio) berücksichtigt werden. Je besser die Übertragungsqualität ist, desto mehr Bits können - bei vorgegebener Bitfehlerrate BER (BER = bit error rate) - einem bestimmten Träger bzw. Signalraum zugeordnet, d.h. von einer bestimmten Trägerschwingung während der Dauer der Schwingung übertragen werden.

Beispielsweise kann die einem bestimmten Träger k zugeordnete Anzahl an Bits ($R_k$) anhand der folgenden Formel bestimmt werden:

$$R_k = \mathrm{ld}(3\,SNR_k/Q^{-1}(BER)+1) \qquad (\text{Formel (1)})$$

Dabei ist $Q^{-1}(...)$ die Inverse der Gaußschen Fehlerfunktion, BER die Bitfehlerrate, ld(...) der Logarithmus zur Basis 2, und $SNR_k$ das dem k-ten Träger zugeordnete Signal-Rauschverhältnis.

In der US-Patentschrift 6,134,273 ist ein Verfahren offenbart bei dem eine Bitlade- und eine Bitratenanpassung bei einem diskreten Multiträgerfrequenzverfahren einer DSL-Datenübertragung erfolgt.

Hierbei wird in einem ersten Schritt für jeden Träger eine potentielle Anzahl von Symbolen bestimmt, die auf diesem Träger übertragen werden können. Im zweiten Schritt werden Kombinationen von Trägern ermittelt, die gemeinsam eine bestimmte Anzahl von Bits (z.B. Blocklänge 16) übertragen können. Der letzte Schritt wird wiederholt, so lange nach freie Kapazitäten auf den Trägern vorhanden sind.

In IEEE Transactions und Communications, VOL. 43, No.2/3/4, February/March/April 1995, Peter S. Chow et al. ist ein Ladealgorithmus für eine Datenübertragung mit spektral aufgeteilten Kanälen zu einem diskreten Multiträgerfrequenzverfahren angegeben.

Die Erfindung hat zur Aufgabe, ein neuartiges Datenübertragungsverfahren, ein neuartiges Datenkommunikationssystem, neuartige Sende- und eine Empfangseinheiten zur Verwendung in einem derartigen System, sowie ein neuartiges Daten-Bit-Zuordnungsverfahren zur Verfügung zu stellen.

Die Erfindung erreicht dieses und weitere Ziele durch den Gegenstand des Anspruchs 1. Vorteilhafte Weiterbildungen der Erfindung sind in den Unteransprüchen angegeben.

Gemäß einem Grundgedanken der Erfindung wird ein Datenkommunikationssystem bereitgestellt, welches eine Sendeeinheit aufweist, von welcher aus über einen Übertragungskanal eine Vielzahl von Frequenzmultiplex-Übertragungssignalen mit jeweils einer von einer Vielzahl vorbestimmter Frequenzen an eine Empfangseinheit übertragen werden, wobei jeweils einem bestimmten - jeweils Übertragungssignalen mit bestimmter Frequenz zugeordnetem - Signalraum jeweils ein oder mehrere Daten-Bits zugeordnet sind, die jeweils durch entsprechende Wahl der Amplitude und Phase der jeweiligen Übertragungssignale von der Sendeeinheit an die Empfangseinheit übertragen werden können, dadurch gekennzeichnet, daß die Anzahl der insgesamt den verwendeten Signalräumen zugeordneten Daten-Bits so gewählt ist, daß sie einer vorgegebenen, in der Sendeeinheit und/oder der Empfangseinheit verwendeten Bit-Blocklänge entspricht, oder einem Vielfachen hiervon.

Werden die Daten in der Sende- und/oder Empfangseinheit unter Verwendung bestimmter Bit-Blocklängen, z.B. Byte-weise (d.h. in Blöcken zu 8 Bit) verarbeitet, und wird - wie vorgeschlagen - die Datenübertragungsrate an diese Bit-Blocklänge angepaßt, können die vorhandenen Systemressouren (z.B. 8-Bitweise organisierte Speicherzellen) besser ausgenutzt werden, als im Stand der Technik.

Gemäß einem weiteren Aspekt der Erfindung wird ein Daten-Bit-Zuordnungsverfahren bereitgestellt, wobei Daten-Bits zu mehreren, jeweils Frequenzmultiplex-Übertragungssignalen mit bestimmter Frequenz zugeordneten Signalräumen zugeordnet werden (bzw. bestimmten Trägern), und wobei die Daten-Bits jeweils durch entsprechende Wahl der Amplitude und Phase von entsprechenden Übertragungssignalen von einer Sendeeinheit an eine Empfangseinheit übertragen werden können, dadurch gekennzeichnet, dass die Anzahl der insgesamt den verwendeten Signalräumen (bzw. den verwendeten Trägern) zugeordneten Daten-Bits so gewählt ist, daß sie einer vorgegebenen, in der Sendeeinheit und/oder der Empfangseinheit verwendeten Bit-Blocklänge entspricht, oder einem Vielfachen hiervon.

Vorteilhaft weist das Daten-Bit-Zuweisungsverfahren die Schritte auf:

a) Vorläufiges Zuordnen einer Anzahl $R_i$ von Daten-Bits auf die Signalräume (bzw. die Träger); und
b) Verringern oder Erhöhen der vorläufigen Daten-Bit-Anzahl $R_i$ derart, daß die endgültige Anzahl $R_i'$ der insgesamt den verwendeten Signalräumen zugeordneten Daten-Bits einer vorgegebenen, in der Sendeeinheit und/oder der Empfangseinheit verwendeten Bit-Blocklänge $B_L$ entspricht, oder einem Vielfachen hiervon.

Bevorzugt wird beim Schritt b) die vorläufige Daten-Bit-Anzahl $R_i$ stets verringert, oder gleichgelassen, oder - alternativ - stets erhöht (oder gleichgelassen).

Besonders vorteilhaft ist ein Daten-Bit-Zuweisungsverfahren, bei welchem beim Schritt b) die vorläufige Daten-Bit-Anzahl $R_i$ dann erhöht wird, wenn die Anzahl an Bits, um die die vorläufige Bit-Anzahl $R_i$ erhöht werden müßte, damit die endgültige Anzahl $R_i'$ der insgesamt den verwendeten Signalräumen zugeordneten Daten-Bits einer vorgegebenen, in der Sendeeinheit und/oder der Empfangseinheit verwendeten Bit-Blocklänge $B_L$ entspricht, oder einem Vielfachen hiervon, kleiner oder kleiner gleich der Anzahl an Bits ist, um die die vorläufige Bit-Anzahl $R_i$ verringert werden müßte, damit die endgültige Anzahl $R_i'$ der insgesamt den verwendeten Signalräumen zugeordneten Daten-Bits einer vorgegebenen, in der Sendeeinheit und/oder der Empfangseinheit verwendeten Bit-Blocklänge $B_L$ entspricht, oder einem Vielfachen hiervon. Ist dies nicht der Fall, wird die vorläufige Daten-Bit-Anzahl $R_i$ verringert.

Bevorzugt werden bei einer Erhöhung der vorläufigen Daten-Bit-Anzahl $R_i$ die zusätzlichen Daten-Bits auf solche Signalräume (bzw. Träger) verteilt, bei denen bei der Übertragung von nach dem Schritt a) diesen zugeordneten Daten-Bits eine relativ niedrige Bitfehlerrate auftreten würde.

Vorteilhaft werden bei einer Erhöhung der vorläufigen Daten-Bit-Anzahl $R_i$ zusätzlich ein oder mehrere Signalräume (bzw. Träger) verwendet, auf die beim Schritt a) keine Daten-Bits verteilt wurden.

Besonders bevorzugt werden bei einer Verringerung der vorläufigen Daten-Bit-Anzahl $R_i$ ursprünglich verteilte Daten-Bits von solchen Signalräumen (bzw. Trägern) entfernt, bei denen bei der Übertragung von nach dem Schritt a) diesen zugeordneten Daten-Bits eine relativ hohe Bitfehlerrate auftreten würde.

Im folgenden wird die Erfindung anhand mehrerer Ausführungsbeispiele und der beigefügten Zeichnung näher erläutert. In der Zeichnung zeigt:

Figur 1 ein Datenkommunikationssystem, bei welchem das erfindungsgemäße Datenübertr-agungsverfahren verwendet wird;

Figur 2 eine schematische Darstellung mehrerer beim erfindungsgemäßen Datenübertragungsverfahren verwendeter Frequenzbänder;

Figur 3a eine schematische Darstellung eines zur Datenübertragung verwendeten, in einem zweidimensionalen, komplexen Signalraum dargestellten Phasensterns;

Figur 3b eine beim in Figur 3a gezeigten Phasenstern verwendete Bitfolgen-Zuordnungstabelle;

Figur 4 eine schematische Darstellung einer zur Datenübertragung verwendeten Trägerschwingung;

Figur 5    eine schematische Detaildarstellung der in Figur 1 gezeigten Modems, sowie der Teilnehmeranschlußleitung;

Figur 6    eine Grafik, welche das bei den verschiedenen Trägern auftretende Signal-Rauschverhältnis veranschaulicht;

Figur 7    eine Grafik, welche die Anzahl $R_k$ an Bits veranschaulicht, die zunächst den verschiedenen Trägern zugeteilt werden;

Figur 8    eine Grafik, welche den sich ergebenden Wert der beim erfindungsgemäßen Bitverteilungsverfahren verwendeten Entscheidungsfunktion $F_B$ für verschiedene Träger veranschaulicht;

Figur 9a    eine Grafik, welche für ein Ausführungsbeispiel der Erfindung die endgültige Anzahl an Bits veranschaulicht, die den verschiedenen Trägern zugeteilt werden, sowie die gegenüber der ursprünglichen Bitverteilung vorgenommenen Änderungen bei einer Verringerung der Bitzahl; und

Figur 9b    eine Grafik, welche für ein alternatives Ausführungsbeispiel die endgültige Anzahl an Bits veranschaulicht, die den verschiedenen Trägern zugeteilt werden, sowie die gegenüber der ursprünglichen Bitverteilung vorgenommenen Änderungen bei einer Erhöhung der Bitzahl.

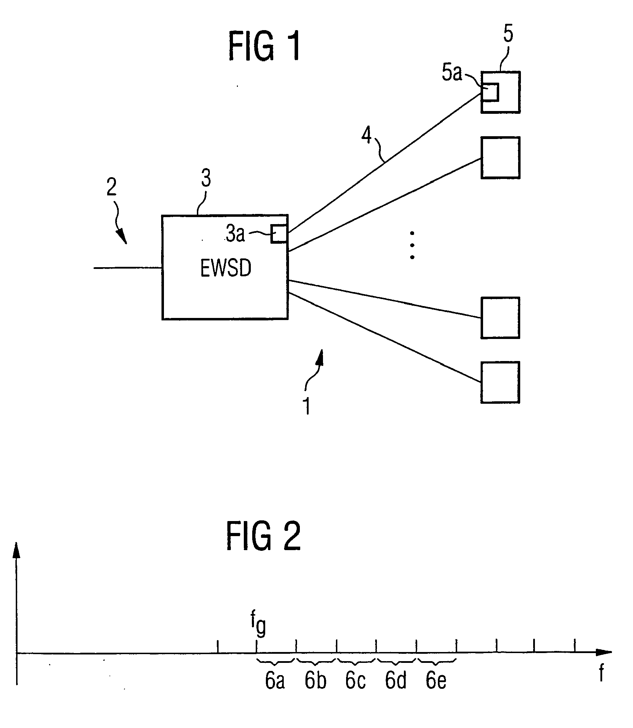

In Figur 1 ist ein Beispiel für ein Datenkommunikationssystem 1 gezeigt, bei welchem das erfindungsgemäße Datenübertragungsverfahren verwendet werden kann.

Das Datenkommunikationssystem 1 weist eine an ein Telefonnetz (hier: das öffentliche Telefonnetz 2) angeschlossene Endvermittlungsstelle 3 (hier: ein elektronisches Wählsystem digital bzw. EWSD) auf. Die Endvermittlungsstelle 3 ist über mehrere Teilnehmeranschlußleitungen 4 mit mehreren Teilnehmer-Endanschlußeinrichtungen 5 verbunden.

Die Datenkommunikation zwischen der Endvermittlungsstelle 3 und der jeweiligen Teilnehmer-Endanschlußeinrichtung 5 (bzw. zwischen den jeweils dort vorgesehenen Modems (Modulatoren-Demodulatoren) 3a, 5a) kann z.B. mittels POTS- (Plain Old Telephone Service) bzw. ISDN- (Integrated Services Digital Network), und mittels DSL- (Digital Subscriber Line), z.B. mittels ADSL- Datenübertragung erfolgen.

Zur DSL-Datenübertragung werden gemäß Figur 2 mehrere Frequenzbänder (bins) 6a, 6b, 6c, 6d verwendet, die oberhalb einer Frequenz fg liegen. Die Frequenzbereiche unterhalb der Frequenz $f_g$ ($f_g \cong 25$ kHz bei POTS bzw. $f_g \cong 130$ kHz bei ISDN) werden für herkömmliche POTS- bzw. ISDN- (Sprach-) Datenübertragung verwendet.

Zur DSL-Datenübertragung zwischen zwischen dem Vermittlungsstellen-Modem 3a und dem Teilnehmer-Modem 5a (oder umgekehrt) kann z.B. ein QAM-Verfahren eingesetzt werden. Hierbei werden für jedes Frequenzband 6a, 6b, 6c, 6d, 6e cosinusförmige Trägerschwingungen 11 verwendet, deren Frequenz z.B. jeweils in der Mitte des entsprechenden Frequenzbands 6a, 6b, 6c, 6d, 6e liegen kann.

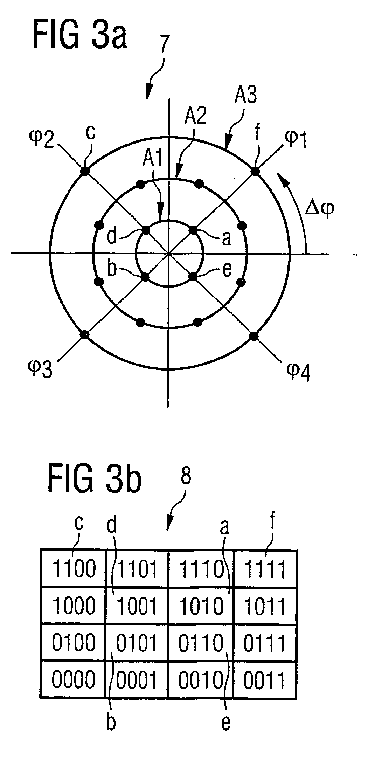

Zur Codierung der zu übertragenden Daten in einer Trägerschwingung 11 kann gemäß Figur 3a z.B. ein in einem zweidimensionalen, komplexen Signalraum dargestellter Phasenstern 7 verwendet werden. Dieser weist hier zur Veranschaulichung drei konzentrische Kreise auf, denen jeweils eine Schwingungsamplitude A1, A2, A3 bestimmter Höhe zugeordnet ist. Auf den Kreisen sind (hier) insgesamt 16 Punkte angeordnet, denen jeweils eine von 16 verschiedenen Folgen von 4 Bits zugeordnet ist.

Beispielsweise ist vier Punkten a, b, d, e, die jeweils bei einem Winkel φ1, φ2, φ3 bzw. φ4 von 45°, 135°, 225° bzw. 315° auf dem innersten, der ersten Amplitude A1 zugeordneten Kreis liegen, gemäß der in Figur 3b gezeigten Zuordnungstabelle 8 jeweils die Bitfolge "1010", "0101", "1001" bzw. "0110" zugeordnet. Auf entsprechende Weise ist gemäß Figur 3a vier weiteren, bei entsprechenden Winkeln φ1, φ2, φ3 bzw. φ4 von 45°, 135°, 225° bzw. 315° auf dem äußersten, der dritten Amplitude A3 zugeordneten Kreis liegenden Punkten c, f gemäß der in Figur 3b gezeigten Zuordnungstabelle 8 jeweils die Bitfolge "1100", "1111", "0000" bzw. "0011" zugeordnet.

Die übrigen Bitfolgen ("1101", "1110", "1000", "1011", "0100", "0111", "0001", "0010") sind 8 Punkten zugeordnet, die auf dem mittleren, der zweiten Amplitude A2 zugeordneten Kreis liegen, und zwar jeweils bei Winkeln φ5, φ6, φ7, φ8, φ9, φ10, φ11 bzw. φ12 von ca. 20°, 70°, 110°, 160°, 200°, 250°, 290° bzw. 340°.

Für jeden Träger kann ein unterschiedlicher Phasenstern verwendet werden. Insbesondere können für jeden Träger Phasensterne mit einer beliebigen Anzahl von im komplexen Signalraum angeordneten Punkten verwendet werden (denen Trägeramplituden und -phasen zugeordnet sind, die sich auf beliebige Weise von den in Figur 3a gezeigten Amplituden und Phasen unterscheiden).

Desto größer die Anzahl der im jeweiligen komplexen Signalraum angeordneten Punkte ist, desto mehr Bits bzw. Bitfolgen können den jeweiligen Trägern zugeordnet, und von den jeweils verwendeten Trägerschwingungen übertragen werden. Beispielsweise können einem Träger - anders als in Figur 3a dargestellt - z.B. 2, 4, 6 oder 8 Bits zugeordnet sein.

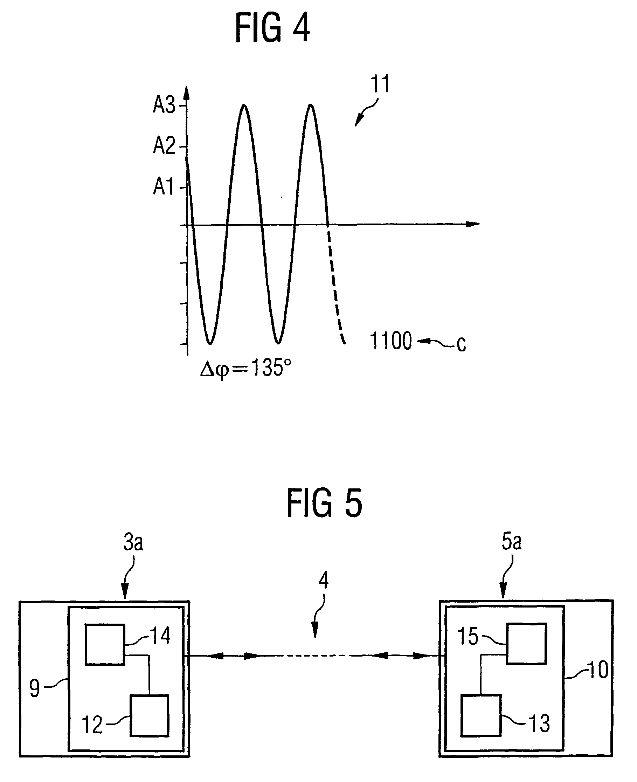

Zur Übermittlung von Daten vom Sender zum Empfänger (z.B. vom Vermittlungsstellen-Modem 3a zum Teilnehmer-Modem 5a, und umgekehrt) wird eine Folge von mehreren, aufeinanderfolgend ausgesendeten, jeweils eine bestimmte Zeitdauer andauernden, frequenzgemultiplexten Trägerschwingungen 11 (vgl. Figur 4) übertragen.

In jedem Frequenzband 6a, 6b, 6c, 6d, 6e weisen sämtliche verwendete Trägerschwingungen 11 jeweils die gleiche, konstante, vorbestimmte Frequenz auf. Jede Trägerschwingung 11 kennzeichnet jeweils eine bestimmte der o.g. Bitfolgen, und zwar über die Höhe der Schwingungsamplitude A1, A2, A3, und über die Phasenverschiebung $\Delta\varphi$ der jeweiligen Trägerschwingung 11 gegenüber einem im Sender und im Empfänger synchron laufenden Grundtakt (bzw. in Bezug auf einen vom jeweiligen Sender ausgesendeten Pilotton).

Die jeweils verwendete Amplitude A1, A2, A3 enspricht dabei derjenigen Amplitude, die diejenigem Kreis des in Figur 3a gezeigten Phasensterns 7 zugeordnet ist, auf dem der Punkt a, b, c, d, e, f liegt, dem die jeweils zu übertragende Bitfolge zugeordnet ist.

Auf entsprechende Weise ist die Phasenverschiebung $\Delta\varphi$ der jeweiligen Trägerschwingung 11 so gewählt, dass sie dem o.g. Winkel $\varphi1$, $\varphi2$, $\varphi3$, $\varphi4$, $\varphi5$, $\varphi6$, $\varphi7$, $\varphi8$, $\varphi9$, $\varphi10$, $\varphi11$ bzw. $\varphi12$ des der jeweils zu übertragenden Bitfolge zugeordneten Punktes a, b, c, d, e, f im Phasenstern 7 entspricht.

Beispielsweise kennzeichnet die in Figur 4 gezeigte Cosinusschwingung 11 durch deren Amplitude A3, und deren Phasenverschiebung von $\Delta\varphi=135°$ die dem Punkt c auf dem Phasenstern 7 zugeordnete Bitfolge "1100".

Wie in Figur 5 gezeigt ist, weisen die miteinander kommunizierenden Modems 3a, 5a jeweils eine Steuereinrichtung 9, 10 mit einem oder mehreren Mikroprozessoren 12, 13 auf, auf denen jeweils ein Datenübertragungs-Steuer-Softwareprogramm läuft, welches in einer mit dem jeweiligen Mikroprozessor 12, 13 verbundenen Speichereinrichtung 14, 15 gespeichert ist.

Durch die Steuereinrichtung 9 im Sender wird veranlasst, dass - abhängig von der jeweils zu übertragenden Bitfolge - über die Teilnehmeranschlussleitung 4 über mehrere Frequenzbänder 6a, 6b, 6c, 6d, 6e im Frequenzmultiplexverfahren parallel verschiedene Trägerschwingungen 11 mit entsprechend gewählter Amplitude und Phase an den Empfänger übertragen werden.

Im Empfänger wird durch dessen Steuereinrichtung 10 die Amplitude A1, A2, A3 und Phasenverschiebung der jeweils empfangenen Trägerschwingungen 11 ermittelt, und dann - unter Verwendung von dem in Figur 3a gezeigten Phasenstern 7 entsprechenden Phasensternen - die den jeweils ermittelten Amplituden A1, A2, A3 und Phasenverschiebungen zugeordneten Bits bzw. Bitfolgen.

Wie bereits oben erwähnt, kann für jeden Träger ein Phasenstern mit einer beliebigen Anzahl von im komplexen Signalraum angeordneten Punkten verwendet werden (denen Trägeramplituden und -phasen zugeordnet sind, die sich auf beliebige Weise von den in Figur 3a gezeigten Amplituden und Phasen unterscheiden). Jedem Träger kann somit eine unterschiedliche Anzahl $R_k$ an Bits bzw. Bitfolgen zugeordnet werden.

Bei der Zuordnung der Bits zu den jeweiligen Trägern kann vorteilhaft wie folgt verfahren werden:

Gemäß dem ADSL-Protokoll werden (zunächst) nur diejenigen Träger berücksichtigt, bei denen die Bitfehlerwahrscheinlichkeit BER unter einem vorbestimmten Bitfehlerwahrscheinlichkeits-Schwellwert liegt - z.B. diejenigen Träger mit einer Bitfehlerwahrscheinlichkeit $< 10^{-7}$ (d.h. z.B. nur eine Anzahl B von gemäß Figur 2 in B verschiedenen Frequenzbändern 6c, 6d, 6e liegenden Trägern, und nicht die - theoretisch mögliche - Anzahl N an Trägern in N verschiedenen Frequenzbereichen 6a, 6b, 6c, 6d, 6e).

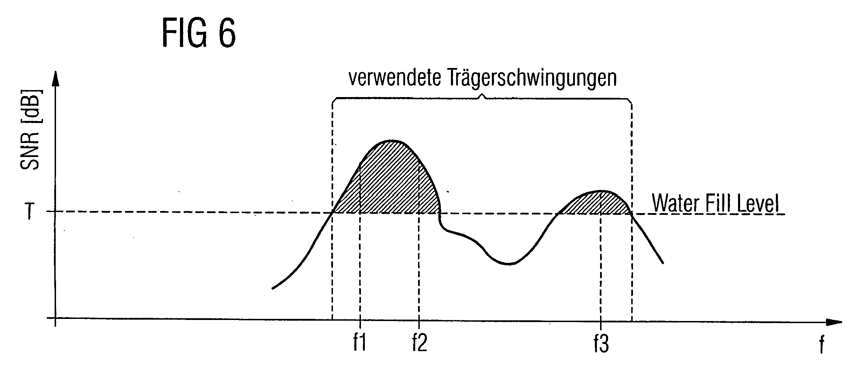

Daraufhin werden sukkzessive die Bits auf diejenigen der die o.g. Bedingung erfüllenden Träger verteilt, die ein Signal-Rauschverhältnis SNR aufweisen, welches gemäß Figur 6 kleiner ist als ein frei wählbarer Signal-Rauschverhältnis-Schwellwert $\Gamma$, der sog. Water Fill Schwellwert (SNR-Gap) (hier z.B. die Träger mit den Frequenzen f1, f2, f3, etc.).

Je höher das Signal-Rauschverhältnis $SNR_k$ eines jeweils berücksichtigten Trägers k ist, desto mehr Bits werden dem jeweiligen Träger k zugeordnet (Träger mit relativ besserer Übertragungsqualität übertragen dann mehr Bits pro Dauer einer Trägerschwingung, als Träger mit relativ schlechterer Übertragungsqualität).

Die Anzahl $R_k$ der einem bestimmten Träger k zuzuordnenden Bits kann z.B. gemäß folgender Formel ermittelt werden:

$$\text{R}_\text{k} \; = \; \text{round[ld(1+(SNR}_\text{k}/10^{\Gamma/10}))]} \qquad\qquad \text{(Formel (2))}$$

Die Rundungsoperation ist notwendig, damit den betroffenen Trägern k jeweils eine ganzzahlige Anzahl $R_k$ an Bits zugeordnet wird.

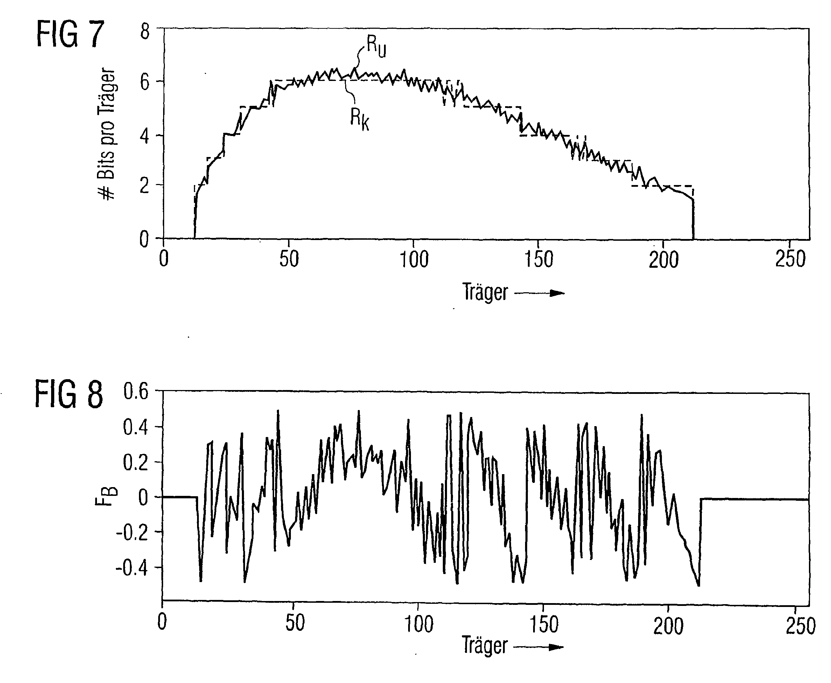

In Figur 7 ist beispielhaft die Anzahl $R_k$ an Bits dargestellt, die gemäß der obigen Formel (2) den jeweils berücksichtigten Trägern zugeteilt werden.

Bei einer Anzahl B von verwendeten Trägern k wird somit - vorläufig - insgesamt die folgende Anzahl $R_i$ an

Bits auf die Träger k verteilt:

$$R_i = \Sigma \text{ round}[\text{ld}(1+(SNR_k/10^{\Gamma/10}))] \qquad \text{(Formel (3))}$$

wobei über k = 0 bis k = B-1 aufsummiert wird.

Im Sender und im Empfänger (z.B. in den in Figur 5 gezeigten Steuereinrichtungen 9, 10, insbesondere in deren Mikroprozessoren 12, 13 und Speichereinrichtungen 14, 15) werden die ausgesendeten, bzw. die über die verschiedenen Trägerschwingungen (isgesamt) während einer bestimmten Zeitdauer, z.B. der Dauer einer Einzelschwingung empfangenen Bits in Datenblöcken verarbeitet, die jeweils eine bestimmte Anzahl $B_L$ von Bits umfassen (z.B. jeweils $2^n$ Bits, beispielsweise 4, 8, 16, 32 oder 64 Bits). Beispielsweise können die Daten im Sender und Empfänger bytweise verarbeitet werden, d.h. in Blöcken, die jeweils 8 Bits umfassen.

Aus diesem Grund wird beim hier dargestellten Bitzuweisungsverfahren die o.g. Bitzahl $R_i$ so angepasst, dass sich eine Bitzahl $R_i'$ ergibt, welche durch Anzahl der o.g. in einem Datenblock enthaltenen Bits (Blocklänge $B_L$) teilbar ist, so dass gilt

$$T_B' = \text{modulo } [R_i', B_L] = 0 \qquad \text{(Formel (4))}$$

bzw. - bei einer Blocklänge $B_L$ von 8 Bit -

$$T_B' = \text{modulo } [R_i', 8] = 0 \qquad \text{(Formel (4'))}$$

Dementsprechend kann die Bit-Anzahl $T_B$, um die die - vorläufige - Bitzahl $R_i$ geändert werden muß, z.B. auf Basis der folgenden Formel ermittelt werden:

$$T_B = \text{modulo } [R_i, B_L] \qquad \text{(Formel (5))}$$

bzw. - bei einer Blocklänge von 8 Bit - anhand der Formel

$$T_B = \text{modulo } [R_i, 8] \qquad \text{(Formel (5'))}$$

Beispielsweise kann

   a) die - vorläufige - Bitzahl $R_i$ stets um die ermittelte Bit-Änderungs-Anzahl $T_B$ verringert werden, oder es kann alternativ

   b) die - vorläufige - Bitzahl $R_i$ stets um die ermittelte Bit-Änderungs-Anzahl $T_B$ erhöht werden, oder es kann alternativ

   c) die - vorläufige - Bitzahl $R_i$ abhängig von den jeweils vorherrschenden Bedingungen entweder entsprechend erhöht, oder verringert werden (z.B. kann die Bitzahl $R_i$ um die ermittelte Bit-Änderungs-Anzahl $T_B$ erhöht werden, falls gilt: $T_B \in [1, ..., B_{L/2}]$, und es kann die Bitzahl $R_i$ um die ermittelte Bit-Änderungs-Anzahl $T_B$ verringert werden, falls gilt: $T_B \in [B_{L/2+1}, ..., B_{L-1}]$).

Bei der Alternative a) wird gegenüber der Alternative b) eine geringere Bitfehlerwahrscheinlichkeit (bei geringerer Übertragungsrate) erreicht, wohingegen bei der Alternative b) gegenüber der Alternative a) eine höhere Übertragungsrate (bei höherer Bitfehlerwahrscheinlichkeit) erzielt wird.

Bei den Alternativen b) und c) werden bei einer Erhöhung der Bitzahl $R_i$ die zusätzlichen Bits jeweils so auf die verschiedenen Träger verteilt, dass die Bitfehlerwahrscheinlichkeit möglichst wenig ansteigt (bzw. die Sendeleistung des Senders zum Ausgleich einer ggf. erhöhten Bitfehlerwahrscheinlichkeit möglichst wenig erhöht werden muß, s.u.).

Auf entsprechende Weise wird bei den Alternativen a) und c) eine etwaige Verringerung der Bitzahl $R_i$ so vorgenommen, dass die Bitfehlerwahrscheinlichkeit möglichst stark abnimmt.

Beispielsweise können die zusätzlichen Bits auf solche Träger verteilt werden, bei denen bei der ursprünglichen Verteilung von Bits auf die verschiedenen Träger (vgl. die o.g. Formel (2)) besonders stark abgerundet wurde.

Entsprechend kann eine Verringerung der Bitzahl bei solchen Trägern vorgenommen werden, bei denen bei der ursprünglichen Verteilung von Bits auf die verschiedenen Träger (vgl. die o.g. Formel (2)) besonders stark aufgerundet wurde.

Die Höhe der bei einem bestimmten Träger k bei der ursprünglichen Verteilung der Bits vorgenommenen Auf- bzw. Abrundung kann z.B. anhand der folgenden Formel ermittelt werden:

$$\texttt{F}_{\texttt{B,k}} = \texttt{R}_\texttt{u} - \texttt{R}_\texttt{k} = \texttt{ld}(1+(\texttt{SNR}_\texttt{k}/10^{\Gamma/10})) - \texttt{round}[\texttt{ld}(1+(\texttt{SNR}_\texttt{k}/10^{\Gamma/10}))]$$

(Formel (6))

Zur Veranschaulichung ist in Figur 7 - neben der den jeweiligen Trägern zunächst zugewiesenen, gerundeten Anzahl $R_k$ = round[ld(1+(SNR$_k$/10$^{\Gamma/10}$) an Bits - zusätzlich für jeden Träger der entsprechende ungerundete Wert $R_u$ dargestellt.

Figur 8 zeigt den Wert der o.g., beim erfindungsgemäßen Bitverteilungsverfahren verwendeten Entscheidungsfunktion $F_{B,k}$ = $R_u$ - $R_k$ für die verschiedenen, verwendeten Träger.

Ist $F_{B,k}$ < 0, ist bei der ursprünglichen Verteilung von Bits auf einen bestimmten Träger k aufgerundet, und bei $F_{B,k}$ > 0 abgerundet worden.

Bei einem Ausführungsbeispiel der Erfindung werden bei einer Erhöhung der vorläufigen Bitzahl $R_i$ (o.g. Alternativen b, c) die zusätzlichen $T_B$ Bits auf eine Anzahl $T_B$ an Träger verteilt, bei denen $F_{B,k}$ > 0 ist, und $F_{B,k}$ jeweils die höchsten Werte aufweist (d.h. auf jeden so bestimmten Träger wird ein zusätzliches Bit verteilt).

Gemäß einem alternativen Ausführungsbeispiel werden bei der Verteilung zusätzlicher Bits unter Verwendung der o.g. Formel (6) zusätzlich auch diejenigen Träger berücksichtigt, die von der ursprünglichen Bitverteilung ausgeschlossen waren (z.B., weil deren Bitfehlerwahrscheinlichkeit BER über dem o.g. Bitfehlerwahrscheinlichkeits-Schwellwert liegt).

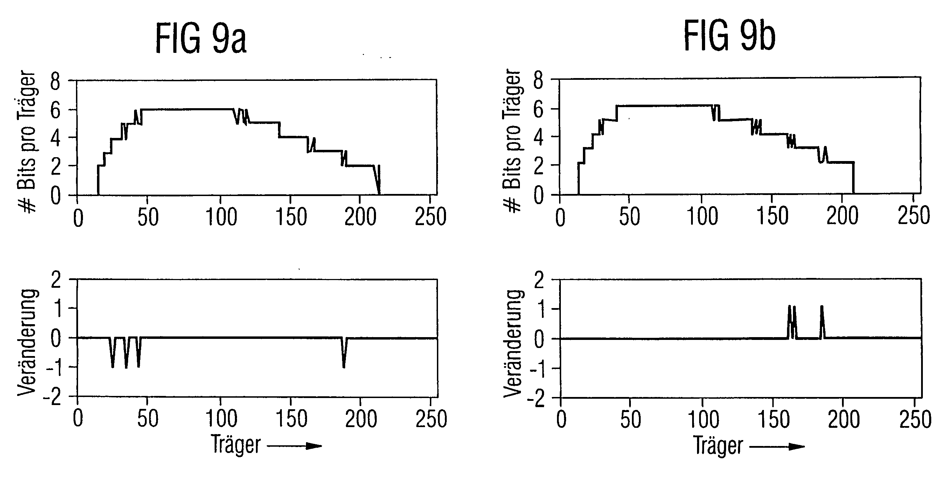

Figur 9b zeigt beispielhaft den Fall, dass auf drei verschiedene, auf die o.g. Weise ermittelte Träger jeweils ein zusätzliches Bit verteilt wird.

Bei einer Verringerung der vorläufigen Bitzahl $R_i$ (o.g. Alternativen a, c) wird die Anzahl $R_k$ von einem bestimmten Träger zugeordneten Bits jeweils bei einer Anzahl $T_B$ an Trägern um jeweils ein Bit verringert, und zwar bei denjenigen $T_B$ Trägern, bei denen $F_{B,k}$ < 0 ist, und $F_{B,k}$ jeweils die niedrigsten Werte aufweist.

Figur 9a zeigt beispielhaft den Fall, dass bei vier verschiedenen, auf die o.g. Weise ermittelten Trägern die Bitzahl um jeweils ein Bit verringert wird.

Nach dem endgültigen Verteilen der Bits auf die verschiedenen Träger, wird die bei den einzelnen Trägern vom Sender zu verwendende Sendeleistung eingestellt (FPA bzw. Fine Power Adjustment), damit bei sämtlichen verwendeten Trägern die Bitfehlerwahrscheinlichkeit nicht einen vorbestimmten Schwellwert übersteigt (z.B. den o.g. vom ADSL-Standard vorgegebenen Schwellwert).

Gemäß dem ADSL-Standard darf die Sendeleistung höchstens um +/- 2,5 dB geändert werden. Beim o.g. alternativen Ausführungsbeispiel, bei welchem bei der Verteilung von Bits zusätzlich auch diejenigen Träger berücksichtigt werden, die von der ursprünglichen Bitverteilung ausgeschlossen waren, kann die Höhe der notwendigen Anpassung der Sendeleistung bei einem bestimmten, wie oben erläutert frei gewähltem Signal-Rauschverhältnis-Schwellwert $\Gamma$ über die gemäß dem ASDL-Standard zugelassene Höhe hinausgehen. Da dies nur wenige Bits betrifft, wird die Systemreserve $\gamma_m$ insgesamt nur geringfügig abgesenkt.

Die Größe der Systemreserve $\gamma_m$ ist ein Maß für die Robustheit des Datenkommunikationssystems 1. Sie kann durch folgende Formel berechnet werden:

$$\gamma_\texttt{m} = \Gamma_\texttt{dB} + \gamma_\texttt{c} - \texttt{k} \qquad \texttt{(Formel (7))}$$

Dabei ist $\Gamma$ der o.g. Signal-Rauschverhältnis-Schwellwert $\Gamma$, und $\gamma_c$ der Codierungsgewinn. Die Konstante k (hier: 98/10) ergibt sich aus den konstanten Termen der o.g. Formel (1).

Das oben erläuterte Bitverteilungsverfahren kann - beispielsweise beim Einstellen des Datenkommunikationssystems 1, d.h. vor der Versendung von Nutzdaten - z.B. automatisch von der in Figur 5 gezeigten Steuereinrichtung 9 des Senders vorgenommen werden (z.B. durch ein spezielles, auf der Speichereinrichtung 14 abgespeichertes Sender-Einstell-Softwareprogramm), oder z.B. vom Wartungspersonal, d.h. "per Hand".

Vor Beginn der eigentlichen Nutzdatenübertragung (und/oder zu vorbestimmten oder frei wählbaren Zeitpunkten nach Beginn der Nutzdatenübertragung) werden vom Sender Signale an den Empfänger übermittelt, welche Informationen bzgl. der vom Sender auf die o.g. Weise ermittelten (oder "per Hand" eingestellten) Bitverteilung enthalten (z.B. Informationen bzgl. der verwendeten Träger, sowie des für die jeweilige Träger verwendeten Phasensterns). Die anschließend vom Sender an den Empfänger mittels entsprechender Übertragungssignale 11 übertragenen Nutzdaten können dann vom Empfänger auf die oben beschriebene Weise decodiert werden.

## Patentansprüche

1. Verfahren zum Zuordnen von Daten-Bits (a, b, c, d) zu mehreren Signalräumen (7), die jeweils einem Frequenzmultiplex-Übertragungssignal mit bestimmter Frequenz zugeordnet sind, in einem Datenkommunikationssystem, in dem in einer Sende- und/oder Empfangseinheit Daten in Blöcken mit einer Länge von $B_L$ Bits verwendet werden, wobei in jedem Signalraum Daten-Bits (a, b, c, d) jeweils durch entsprechende Wahl der Amplitude (A1) und Phase ($\varphi$1) mittels entsprechender Übertragungssignale (11) von einer Sendeeinheit (3a) an eine Empfangseinheit (5a) übertragbar sind,
   **dadurch gekennzeichnet,**
   **dass** ausgehend von einer den Signalräumen insgesamt vorläufig zugeordneten Anzahl von Bits $R_i$ eine Bit-Änderungs-Anzahl $T_B$ gemäß der Formel $T_B$ = modulo ($R_i$, $B_L$) bestimmt wird und dass die vorläufige Daten-Bit-Anzahl $R_i$ durch Erhöhen oder Verringern um die Bit-Änderungs-Anzahl $T_B$ derart verändert wird, dass die endgültige Daten-Bit-Anzahl $R_i$' durch die in einem Datenblock enthaltene Bitanzahl $B_L$ teilbar ist.

2. Verfahren nach Anspruch 1, welches die Schritte aufweist:

   a) Vorläufiges Zuordnen einer Anzahl ($R_i$) von Daten-Bits (a, b, c, d) auf die Signalräume (7); und
   b) Verringern oder Erhöhen der vorläufigen Daten-Bit-Anzahl ($R_i$) derart, daß die endgültige Anzahl ($R_i$') der insgesamt den verwendeten Signalräumen (7) zugeordneten Daten-Bits (a, b, c, d) einer vorgegebenen, in der Sendeeinheit (3a) und/oder der Empfangseinheit (5a) verwendeten Bit-Blocklänge ($B_L$) entspricht, oder einem Vielfachen hiervon.

3. Verfahren nach Anspruch 2, bei welchem beim Schritt a) einem bestimmten Signalraum (7) umso mehr Daten-Bits (a, b, c, d) zugeordnet werden, je besser die jeweilige Übertragungsqualität über die entsprechende Übertragungssignal-Frequenz (f1, f2, f3) verwendende Übertragungssignale (11) ist.

4. Verfahren nach Anspruch 2 oder 3, bei welchem beim Schritt b) die vorläufige Daten-Bit-Anzahl ($R_i$) stets verringert, oder gleichgelassen wird.

5. Verfahren nach Anspruch 2 oder 3, bei welchem beim Schritt b) die vorläufige Daten-Bit-Anzahl ($R_i$) stets erhöht, oder gleichgelassen wird.

6. Verfahren nach Anspruch 2 oder 3, bei welchem beim Schritt b) die vorläufige Daten-Bit-Anzahl ($R_i$) dann erhöht wird, wenn die Anzahl an Bits, um die die vorläufige Bit-Anzahl ($R_i$) erhöht werden müßte, damit die endgültige Anzahl ($R_i$') der insgesamt den verwendeten Signalräumen (7) zugeordneten Daten-Bits (a, b, c, d) einer vorgegebenen, in der Sendeeinheit (3a) und/oder der Empfangseinheit (5a) verwendeten Bit-Blocklänge ($B_L$) entspricht, oder einem Vielfachen hiervon, kleiner oder kleiner gleich der Anzahl an Bits-ist, um die die vorläufige Bit-Anzahl ($R_i$) verringert werden müßte, damit die endgültige Anzahl ($R_i$') der insgesamt den verwendeten Signalräumen (7) zugeordneten Daten-Bits (a, b, c, d) einer vorgegebenen, in der Sendeeinheit (3a) und/oder der Empfangseinheit (5a) verwendeten Bit-Blocklänge ($B_L$) entspricht, oder einem Vielfachen hiervon.

7. Verfahren nach einem der Ansprüche 2, 3, 5 oder 6, bei welchem bei einer Erhöhung der vorläufigen Daten-Bit-Anzahl ($R_i$) die zusätzlichen Daten-Bits auf solche Signalräume (7) verteilt werden, bei denen bei der Übertragung von nach dem Schritt a) diesen zugeordneten Daten-Bits eine relativ niedrige Bitfehlerrate auftreten würde.

8. Verfahren nach Anspruch 7, bei welchem bei einer Erhöhung der vorläufigen Daten-Bit-Anzahl ($R_i$) zusätzlich ein

oder mehrere Signalräume verwendet werden, auf die beim Schritt a) keine Daten-Bits verteilt wurden.

9. Verfahren nach einem der Ansprüche 2, 3 4 oder 6, bei welchem bei einer Verringerung der vorläufigen Daten-Bit-Anzahl ($R_i$) ursprünglich verteilte Daten-Bits von solchen Signalräumen (7) entfernt werden, bei denen bei der übertragung von nach dem Schritt a) diesen zugeordneten Daten-Bits eine relativ hohe Bitfehlerrate auftreten würde.

**Claims**

1. Method for assigning data bits (a, b, c, d) to a number of signal spaces (7), each being assigned to a frequency multiplex transmission signal of a specific frequency, in a data communication system, in which data is used in blocks with a length of $B_L$ bits in a transmit and/or receive unit, it being possible to transmit data bits (a, b, c, d) in each instance from a transmit unit (3a) to a receive unit (5a) in each signal space by means of corresponding transmission signals (11) by corresponding selection of the amplitude (A1) and phase ($\varphi$1),
**characterised in that**
based on a number of bits $R_i$ assigned temporarily to the signal spaces overall, a bit change number $T_B$ is determined according to the formula $T_B$ = modulo ($R_i$, $B_L$) and the temporary number of data bits $R_i$ is changed by increasing or reducing by the bit change number $T_B$, such that the final number of data bits $R_i$' can be divided by the number of bits $B_L$ contained in a data block.

2. Method according to claim 1, having the steps:

   a) Temporary assignment of a number ($R_i$) of data bits (a, b, c, d) to the signal spaces (7); and
   b) Reducing or increasing the temporary number of data bits ($R_i$) such that the final number ($R_i$') of data bits (a, b, c, d) assigned overall to the signal spaces (7) used corresponds to a predefined bit block length ($B_L$) used in the transmit unit (3a) and/or the receive unit (5a), or a multiple thereof.

3. Method according to claim 2, wherein in step a) more data bits (a, b, c, d) are assigned to a specific signal space (7), the better the respective transmission quality over transmission signals (11) using the corresponding transmission signal frequency (f1, f2, f3).

4. Method according to claim 2 or 3, wherein in step b) the temporary number of data bits ($R_i$) is constantly reduced or left the same.

5. Method according to claim 2 or 3, wherein in step b) the temporary number of data bits ($R_i$) is constantly increased or left the same.

6. Method according to claim 2 or 3, wherein in step b) the temporary number of data bits ($R_i$) is increased, if the number of bits, by which the temporary number of bits ($R_i$) would have to be increased, so that the final number ($R_i$') of data bits (a, b, c, d) assigned overall to the signal spaces (7) used corresponds to a predefined bit block length ($B_L$) used in the transmit unit (3a) and/or receive unit (5a), or a multiple thereof, is smaller than or equal to the number of bits by which the temporary number of bits ($R_i$) would have to be reduced, so that the final number ($R_i$') of data bits (a, b, c, d) assigned overall to the signal spaces (7) used corresponds to a predefined bit block length ($B_L$) used in the transmit unit (3a) and/or receive unit (5a), or a multiple thereof

7. Method according to one of claims 2, 3, 5 or 6, wherein, where the temporary number of data bits ($R_i$) is increased, the additional data bits are distributed to such signal spaces (7), wherein a relatively low bit error rate would occur during the transmission of data bits assigned to these according to step a).

8. Method according to claim 7, wherein, where the temporary number of data bits ($R_i$) is increased, one or more signal spaces are also used, to which no data bits were distributed in step a).

9. Method according to one of claims 2, 3, 4, or 6, wherein, where the temporary number of data bits ($R_i$) is reduced, originally distributed data bits are removed from those signal spaces (7), wherein a relatively high bit error rate would occur during the transmission of data bits assigned to these according to step a).

**Revendications**

1.  Procédé d'attribution de bits de données (a, b, c, d) à plusieurs espaces de signaux (7) qui sont respectivement attribués à un signal de transmission, par multiplexage en fréquence, de fréquence déterminée, dans un système de communication de données, dans lequel des données en blocs d'une longueur de $B_L$ bits sont utilisées dans une unité d'émission et/ou réception,

    dans lequel, dans chaque espace de signaux, des bits de données (a, b, c, d) sont respectivement transmissibles à une unité de réception (5a) par une unité d'émission (3a) par sélection correspondante de l'amplitude (A1) et de la phase ($\varphi$1) au moyen de signaux de transmission correspondants (11),

    **caractérisé en ce**

    **que**, en partant d'un nombre de bits $R_i$, attribués en tout provisoirement aux espaces de signaux, un nombre de modifications de bits $T_B$ est déterminé selon la formule $T_B$ = modulo ($R_i$, $B_L$) et en ce que le nombre provisoire de bits de données $R_i$ est modifié, par augmentation ou diminution, du nombre de modifications de bits $T_B$, de telle manière que le nombre définitif de bits de données $R_i$' est divisible par le nombre de bits $B_L$ contenu dans un bloc de données.

2.  Procédé selon la revendication 1, qui présente les étapes :

    a) attribution provisoire d'un nombre ($R_i$) de bits de données (a, b, c, d) aux espaces de signaux (7) ; et
    b) diminution ou augmentation du nombre provisoire de bits de données ($R_i$) de telle manière que le nombre définitif ($R_i$') de bits de données (a, b, c, d) attribués en tout aux espaces de signaux utilisés (7) correspond à une longueur de bloc de bits ($B_L$) prédéterminée, utilisée dans l'unité d'émission (3a) et/ou dans l'unité de réception (5a), ou à un multiple de cette longueur de bloc.

3.  Procédé selon la revendication 2, dans lequel, à l'étape a), d'autant plus de bits de données (a, b, c, d) sont attribués à un espace de signal déterminé (7) que la qualité respective de transmission des signaux de transmission (11) utilisant la fréquence de signal de transmission correspondante (f1, f2, f3) est meilleure.

4.  Procédé selon la revendication 2 ou 3, dans lequel, à l'étape b), le nombre provisoire de bits de données ($R_i$) est toujours diminué ou est laissé constant.

5.  Procédé selon la revendication 2 ou 3, dans lequel, à l'étape b), le nombre provisoire de bits de données ($R_i$) est toujours augmenté ou est laissé constant.

6.  Procédé selon la revendication 2 ou 3, dans lequel, à l'étape b), le nombre provisoire de bits de données ($R_i$) est augmenté lorsque le nombre de bits, duquel le nombre provisoire de bits ($R_i$) devrait être augmenté afin que le nombre définitif ($R_i$') de bits de données (a, b, c, d) attribués en tout aux espaces de signaux utilisés (7), corresponde à une longueur de bloc de bits ($B_L$) prédéterminée, utilisée dans l'unité d'émission (3a) et/ou dans l'unité de réception (5a), ou à un multiple de cette longueur de bloc, est inférieur ou inférieur/égal au nombre de bits, duquel le nombre provisoire de bits ($R_i$) devrait être diminué afin que le nombre définitif ($R_i$) de bits de données (a, b, c, d) attribués en tout aux espaces de signaux utilisés (7) corresponde à une longueur de bloc prédéterminée, utilisée dans l'unité d'émission (3a) et/ou l'unité de réception (5a), ou à un multiple de cette longueur de bloc.

7.  Procédé selon l'une quelconque des revendications 2, 3, 5 ou 6, dans lequel, lors d'une augmentation du nombre provisoire de bits de données ($R_i$), les bits de données supplémentaires sont répartis sur des espaces de signaux (7), dans lesquels, lors de la transmission de bits de données attribués à ces espaces selon l'étape a), il se produirait un taux d'erreur sur les bits relativement bas.

8.  Procédé selon la revendication 7, dans lequel, lors d'une augmentation du nombre provisoire de bits de données ($R_i$), un ou plusieurs espaces de signaux supplémentaires sont utilisés, sur lesquels aucun bit de données n'a été réparti à l'étape a).

9.  Procédé selon l'une quelconque des revendications 2, 3, 4 ou 6, dans lequel, lors d'une diminution du nombre provisoire de bits de données ($R_i$), des bits de données initialement répartis sont retirés d'espaces de signaux (7), dans lesquels, lors de la transmission de bits de données attribués à ces espaces de signaux selon l'étape a), il se produirait un taux d'erreur sur les bits relativement élevé.

EP 1 423 955 B1

# FIG 1

EWSD

# FIG 2

$f_g$

6a 6b 6c 6d 6e

f

11

## FIG 3a

## FIG 3b

| c | d | a | f |
|------|------|------|------|
| 1100 | 1101 | 1110 | 1111 |
| 1000 | 1001 | 1010 | 1011 |
| 0100 | 0101 | 0110 | 0111 |
| 0000 | 0001 | 0010 | 0011 |

## FIG 4

## FIG 5

FIG 6

FIG 7

FIG 8

## FIG 9a

## FIG 9b

EP 1 423 955 B1